# EUROPÄISCHE PATENTSCHRIFT

(11) **EP 0 808 953 B1**
(45) Veröffentlichungstag und Bekanntmachung des Hinweises auf die Patenterteilung: **06.02.2002**
(21) Anmeldenummer: 96108118.9
(22) Anmeldetag: 22.05.1996
(51) Int. Cl.: E04B 1/00, E04B 1/80, C04B 16/02, C04B 18/24, C04B 20/00, C04B 22/08, C04B 22/12, C04B 24/38

(54) **Dämmaterial aus Naturprodukten und Herstellungsverfahren dafür**
Insulation material made of natural products and manufacturing method
Matériau d'isolation fait de produits naturels et procédé de fabrication

(43) Veröffentlichungstag der Anmeldung: 26.11.1997
(73) Patentinhaber: ERB, Gottfried, D-35410 Hungen (DE); WELTEKE, Reinhard, D-34130 Kassel (DE); WELTEKE, Uwe, 34128 Kassel (DE); Welteke-Erb, Marianne, D-35410 Hungen (DE); SZYPURA, Claus R., 34130 Kassel (DE)
(72) Erfinder:
(74) Vertreter: Patentanwälte Zellentin & Partner

(56) Entgegenhaltungen:
- DE-A- 3 545 001
- GB-A- 647 128
- US-A- 2 470 641
- US-A- 4 349 413

## Beschreibung

Die vorliegende Erfindung betrifft ein Dämmaterial aus Naturprodukten, welches sowohl als loses Isoliermaterial als auch zu Dämmplatten verpreßt verwendet werden kann, sowie ein Herstellungsverfahren für ein solches Dämmaterial.

Der hier nächstgelegene Stand der Technik ergibt sich aus dem DE-A-35 45 001. Die dort beschriebene Wärmedämmplatte, welche Papier und/oder andere cellulosehaltige Produkte in zerkleinerter Form, sowie pflanzliche und/oder tierische Naturfasern und Bindemittel, sowie pflanzliche und/oder tierische Naturfasern und Bindemittel, sowie feuerhemmende und fäulnisverhindernde Komponenten enthält, hat jedoch zwei entscheidende Nachteile:
1. Die Wärmedämmplatte gemäß dem Stand der Technik besteht zum überwiegenden Teil aus Altpapier. Dieses ist inzwischen relativ teuer.
2. Die Wärmedämmplatte gemäß dem Stand der Technik erreicht nicht die Anforderungen an einen schwer entflammbaren Baustoff der Klasse B1 nach DIN 4102.

Bei den losen Dämmaterialien ergibt sich der nächstgelegene Stand der Technik aus dem unter dem Markennamen "Isofloc" der Fa. Isofloc Ökologische Bautechnik GmbH auf dem Markt befindlichen Wärmedämmaterial. Dieses Material hat jedoch ebenfalls den Nachteil, daß es größtenteils aus Altpapier erzeugt werden muß, und daß mit diesem Material die Brandklasse B1 nach DIN 4102 nicht erreicht werden kann.

Weiterhin sind Isolationsmaterialien aus Cellulosefasern in US-A-4,349,413 beschrieben, welche Borax als Flammschutzmittel enthalten.

Es ist daher Aufgabe der vorliegenden Erfindung, ein Wärmedämmaterial zu schaffen, welches mit einem geringeren Papieranteil auskommt und gleichzeitig problemlos die Anforderungen für einen schwer entflammbaren Baustoff gemäß Brandklasse B1 nach DIN 4102 erfüllt. Gleichzeitig gibt die vorliegende Erfindung ein Verfahren zur Herstellung des entsprechenden Dämmaterials an.

Erfindungsgemäß wird zur Lösung der vorstehenden Aufgabe ein Dämmaterial mit folgender Zusammensetzung vorgeschlagen:
37 - 52 Masse-% aus einem oder mehreren der folgenden Stoffe:
   Kraftpapier
   Zeitungspapier
   Zellulose
   Zellstoff
   Pappe
   Tapetenreste
   Eierverpackung
   Laub
   Holzspäne
   Korkreste
   zerkleinert in Stückchen von 0-5 mm.
16 - 30 Masse-% aus einem oder mehreren der folgenden Stoffe:
   Jute
   Sisal
   Leinfasern
   Hanf
   Stroh
   Schilf
   Flachs
   Rohbaumwolle
   Kokosfasern
   Heu
   zerfasert auf Faserlängen von überwiegend 5-30 mm.
18 - 47 Masse-% aus einem oder mehreren der folgenden Stoffe:
   Boraxpenthahydrat
   Boraxdecahydrat
   Borax-Polybor
   Borsäure
   Aluminiumsulfat
   Tallharz
   Ligninsulfonat
   welches weiterhin Magnesium- und/oder Calciumchlorid, insbesondere in einer Menge von 5 - 5,5 Masse-% enthält.

Vorzugsweise wird dieses Dämmaterial zu Dämmplatten mit einer Dichte von 40 - 110 Kilogramm pro Kubikmeter gepreßt. Ebenso kann dieses Material als loses Isoliermaterial mit einer Dichte von 25 - 60 Kilogramm pro Kubikmeter Verwendung finden.

Mit diesem Material läßt sich die Brandklasse B1 nach DIN 4102 erreichen. Gleichzeitig weist dieses Material eine Wärmeleitfähigkeit von 0,03 - 0,045 W/m²K auf.

Bevorzugter Anwendungsbereich für dieses Dämmaterial sind die Wärmedämmung, die Schalldämmung und die Trittschalldämmung im Dach-, Wand- und Fußbodenbereich.

Folgende Rezepturen für das erfindungsgemäße Dämmaterial sind besonders bevorzugt:
Für Dämmplatten mit einer Rohdichte von etwa 90 - 100 Kilogramm pro Kubikmeter:
16 Masse-% aus einem oder mehreren der folgenden Stoffe:
   Heu
   Laub
   Stroh
12,5 Masse-% Jute
3,5 Masse-% aus einem oder mehreren der folgenden Stoffe:
   Sisal
   Lein
   Hanffaser
21 Masse-% aus einem oder mehreren der folgenden Stoffe:
   Kraftpapier
   Zeitungspapier
   Zellulose
   Pappe
   Tapetenreste
   Eierverpackungskartons
13 Masse-% Borax-Decahydrat
13 Masse-% Borsäure
5,5 Masse-% Tallharz oder Balsamharz
5 Masse-% Aluminiumsulfat
5 Masse-% Ligninsulfonat
   sowie
5,5 Masse-% Magnesiumchlorid und/oder Calciumchlorid

Besonders bevorzugt ist es dabei, ausschließlich Magnesiumchlorid zu verwenden.

Mit dieser Dämmplatte läßt sich eine optimale Brandsicherheit ohne zusätzliche Flammschutzmittel erzielen. Es ist dabei problemlos möglich, die Norm B1 der DIN 4102 für Baustoffe zu erfüllen. Zusätzlich weist diese besonders bevorzugte Dämmplatte eine niedrigere Rauchgasdichte und ein besseres Glimmverhalten als alle bisher bekannten Dämmplatten aus biologischen Baustoffen auf. Die Anforderungen an die Rauchgasdichte und das Glimmverhalten gemäß der neuen Norm für schwerentflammbare Baustoffe kann derzeit nur mit dieser Platte erreicht werden.

Ein weiteres Ausführungsbeispiel betrifft eine leichtere Dämmplatte, mit der sich ebenfalls noch die Anforderungen der B1-Klasse nach DIN 4102 erfüllen lassen. Diese Dämmplatte weist eine Rohdichte von etwa 70 Kilogramm pro Kubikmeter auf.

Die Zusammensetzung ist folgendermaßen:
20 Masse-% aus einem oder mehreren der folgenden Stoffe:
   Heu
   Laub
   Stroh
14 Masse-% Jute
5 Masse-% aus einem oder mehreren der folgenden Stoffe:
   Sisal
   Lein
   Hanffaser
24 Masse-% aus einem oder mehreren der folgenden Stoffe:
   Kraftpapier
   Zeitungspapier
   Zellulose
   Pappe
   Tapetenreste
   Eierverpackungskartons
9 Masse-% Borax-Decahydrat
9 Masse-% Borsäure
5 Masse-% Tallharz oder Balsamharz
4,5 Masse-% Aluminiumsulfat
4,5 Masse-% Ligninsulfonat
5 Masse-% Magnesiumchlorid.

Folgendes Herstellungsverfahren ist für die Herstellung der erfindungsgemäßen Dämmplatten bevorzugt:

Jeder der verwendeten Stoffe aus der Stoffgruppe Papier, Kraftpapier, Zeitungspapier, Zellulose, Pappe, Tapetenreste, Eierverpackungskartons, werden getrennt zu fertigen Fasern aufgeschlossen und in einem Faserbunker getrennt zwischengelagert. Dabei wird jede Materialsorte vorzugsweise in 3 Stufen getrennt aufgeschlossen: Einerseits im Schredder zu ca. 20 - 50 cm² großen Stücken, andererseits in der Hammermühle zu ca. 4 - 6 mm² großen Stücken und im Zerfaserer zu Fasern vermahlen.

Von entscheidender Bedeutung ist dabei, daß das Material nach jeder Stufe entstaubt wird, und alle Partikel kleiner 63 µm (der Staub) abgesondert werden. Dies ist besonders wichtig, da das Verfahren sonst nicht befriedigend funktioniert.

Sofern die Stoffe Heu, Laub oder Stroh Verwendung finden, werden diese im Zerfaserer entsprechend zerkleinert, entstaubt und ebenfalls zwischengelagert.

Sofern Ausgangsstoffe wie Jute, Sisal, Leinfasern, Hanf, Schilf, Flachs, Rohbaumwolle, Kokosfasern oder Heu Verwendung finden, werden diese Fasern entsprechend aufgelockert. Diese Materialien können in jeder Kombination vermischt werden.

Je nach Rezeptur werden aus den Faserbunkern die entsprechenden Materialien über Bandenwaagen zum Mischer dosiert und dabei nochmals entstaubt.

Im Trockenmischer wird aus den einzelnen Faserkomponenten ein homogenes Gemisch hergestellt.

Auf dem Weg zum nächsten Mischer wird das Material mit Borax imprägniert, indem das Borax als 40 - 60 Masse-%ige wäßrige Lösung mit Düsen aufgesprüht wird.

Sofern weitere Bindemittel (Tallharz, Balsamharz oder Ligninsulfonat sowie Borsäure oder Aluminiumsulfat) Verwendung finden, werden diese in entsprechenden Mengen pneumatisch in eine Feinmühle dosiert, dort gemahlen und kurz vor dem zweiten Mischer, also nach der Imprägnierung mit Borax zugegeben.

Nach diesem Schritt und direkt vor dem zweiten Mischer wird das Magnesiumchlorid oder Calciumchlorid als 20 - 50 Masse-%ige wäßrige Lösung zugegeben.

Die gesamten Komponenten werden nun dem Mischer zugeführt, und dort wird dann ein homogenes Gemisch hergestellt.

Auf einer Streumaschine mit einer gesteuerten Rückstreifwalze wird eine gleichmäßige Schicht aus dem Dämmaterial gebildet, die vorgepreßt wird.

Das Material wandert dann in den Dämpfkanal, wo die Bindemittel durch eine Zugabe von Wasserdampf mit einer Temperatur von etwa 110° Celsius aktiviert werden.

Die Masse wird nun durch ein Preßband auf das gewünschte Sollmaß gedrückt. Die Platten werden dann im Trockenkanal bei einer Temperatur von etwa 40° Celsius getrocknet.

Bei der Endverarbeitung kann der kontinuierliche Plattenstrang dann zu den einzelnen Plattenformaten geschnitten, verpackt und palettiert werden.

Wenn statt der Herstellung von Dämmplatten aus dem Dämmaterial die Verwendung des Dämmaterials als loses Isoliermaterial beabsichtigt ist, wird das Material nach Verlassen des zweiten Mischers im losen Zustand mit Wasserdampf bei einer Temperatur von etwa 110° Celsius beaufschlagt, um die Bindemittel zu aktivieren. Das lose Material wird dann im Trockenkanal bei einer Temperatur von ca. 40° Celsius getrocknet.

Gegenüber den bisherigen Herstellungsverfahren für Dämmaterialien hat dieses Verfahren noch den Vorteil des geringeren Energieverbrauchs. Gemäß dem Stand der Technik ist nämlich bisher im Dämpfkanal eine Dampftemperatur von etwa 150° Celsius erforderlich. Demgegenüber wird jetzt nur eine Dampftemperatur von 110° Celsius benötigt. Ebenfalls kann die Trocknung erfindungsgemäß bei wesentlich geringerer Temperatur erfolgen, nämlich bei 40° Celsius statt bisher 80 - 100° Celsius.

## Patentansprüche

1. Dämmaterial folgender Zusammensetzung :
Teil A:
37 - 52 Masse- % aus einem oder mehreren der folgenden Stoffe:
Kraftpapier
Zeitungspapier
Cellulose
Zellstoff
Pappe
Tapetenreste
Eierverpackung
Laub
Holzspäne
Korkreste
zerkleinert in Stückchen von 0 - 5 mm²
Teil B:
16 - 30 Masse- % aus einem oder mehreren der folgenden Stoffe:
Jute
Sisal
Leinfasern
Hanf
Stroh
Schilf
Flachs
Rohbaumwolle
Kokosfasern
Heu
zerfasert auf Faserlängen von überwiegend 5 - 30 mm
Teil C:
18 - 47 Masse-% aus einem der oder mehreren der folgenden Stoffe:
Boraxpentahydrat
Boraxdecahydrat
Borax-Polybor
Borsäure
Aluminiumsulfat
Tallharz
Ligninsulfonat
**dadurch gekennzeichnet, daß** Teil C Magnesium- und/oder Calciumchlorid enthält.

2. Dämmaterial gemäß Anspruch 1, **dadurch gekennzeichnet, daß** Teil C 5 - 5,5 Masse-% Magnesium- und/oder Calciumchlorid enthält.

3. Dämmaterial nach Anspruch 1 oder 2, **dadurch gekennzeichnet, daß** dieses Dämmaterial zu Dämmplatten mit einer Dichte von 40 - 110 Kilogramm pro Kubikmeter verpreßt ist.

4. Dämmaterial nach einem der Ansprüche 1 bis 3, **dadurch gekennzeichnet, daß** es als loses Isoliermaterial mit einer Dichte von 25 - 60 Kilogramm pro Kubikmeter Verwendung findet.

5. Verfahren zur Herstellung von Dämmaterial der Zusammensetzung gemäß Anspruch 1 oder 2, **gekennzeichnet durch** die folgenden Verfahrensschritte:
a. Aufschließen der verwendeten faserhaltigen Naturstoffe zu fertigen Fasern für jede Materialsorte getrennt in einer oder mehreren Zerkleinerungs- oder Zerfaserungsstufen
b. Entstaubung des Materials nach jeder Zerkleinerungs- oder Zerfaserungsstufe
c. Dosierung der einzelnen Faserfraktionen zum Mischer
d. Herstellung eines homogenen Gemischs aus den einzelnen Faserkomponenten in einem Mischer
e. Imprägnierung des homogenen Gemischs aus dem ersten Mischer auf dem Weg zum zweiten Mischer, in dem Borax als 40 - 60 %ige wäßrige Lösung aufgesprüht wird
f. Zugabe von Magnesiumchlorid oder Calciumchlorid als 20 - 50 %ige wäßrige Lösung direkt vor dem zweiten Mischer
g. Herstellung eines homogenen Gemischs aus allen Komponenten in dem zweiten Mischer
h. Förderung des Materials in einen Dämpfkanal, in dem Wasserdampf mit einer Temperatur von etwa 110 °C zugegeben wird
i. Trocknen des Materials in einem Trockenkanal bei einer Temperatur von etwa 40 °C.

6. Verfahren nach Anspruch 5, **dadurch gekennzeichnet, daß** zur Herstellung von Dämmplatten das Gemisch aus Verfahrensschritt g) zu einer gleichmäßigen Schicht geformt wird, welche dem Verfahrensschritt h) unterworfen wird, dessen Produkt mit einer Presse auf die gewünschte Plattendicke komprimiert wird, bevor es dem Verfahrensschritt i) unterworfen wird.

## Claims

1. Insulating material of the following composition:
Part A:
37 - 52 weight % of one or more of the following materials:
kraft paper
newspaper
cellulose
wood pulp
paperboard
wallpaper residues
egg packaging
leaves
wood shavings
cork residues
comminuted into pieces of 0 - 5 mm²
Part B:
16 - 30 weight % of one or more of the following materials:
jute
sisal
flax fibres
hemp
straw
reeds
flax
raw cotton
coconut fibres
hay
ground to fibres lengths of preponderantly 5 - 30 mm
Part C:
18 - 47 weight % of one or more of the following materials:
borax pentahydrate
borax decahydrate
borax polybor
boric acid
aluminium sulphate
tall resin
lignin sulphonate
**characterised in that** Part C contains magnesium and/or calcium chloride.

2. Insulating material according to claim 1, **characterised in that** Part C contains 5 - 5.5 weight % of magnesium and/or calcium chloride.

3. Insulating material according to claim 1 or 2, **characterised in that** this insulating material is pressed to insulating plates with a density of 40 - 110 kilogram per cubic metre.

4. Insulating material according to one of claims 1 to 3, **characterised in that** it finds use as loose insulating material with a density of 25 - 60 kilogram per cubic metre.

5. Process for the production of insulating material of the composition according to claim 1 or 2, **characterised by** the following process steps:
a. breaking up of the fibre-containing natural materials used to finished fibres for each kind of material separately in one or more comminuting or grinding steps
b. freeing from dust of the material after each comminution or grinding step
c. dosing of the individual fibre fractions to the mixer
d. production of a homogeneous mixture from the individual fibre components in a mixer
e. impregnation of the homogeneous mixture from the first mixer on the way to the second mixer in which borax is sprayed on as 40 - 60% aqueous solution
f. addition of magnesium chloride or calcium chloride as 20 - 50% aqueous solution directly before the second mixer
g. production of a homogeneous mixture from all components in the second mixer
h. conveying of the material in a steam passage into which steam is added with a temperature of about 110°C
i. drying of the material in a drying canal at a temperature of about 40°C.

6. Process according to claim 5, **characterised in that**, for the production of insulating plates, the mixture frpm process step g) is formed into a uniform layer which is subjected to process step h) the product of which is compressed with a press to the desired plate thickness before it is subjected to the process step i).

## Revendications

1. Matériau isolant de la composition suivante :
Partie A :
37 à 52 % de la masse d'une ou de plusieurs matières suivantes :
papier kraft
papier journal
cellulose
pâte chimique
carton
restes de papier peint
emballages pour oeufs
feuillage
sciures de bois
restes de liège
réduites en particules de 0 à 5 mm².
Partie B :
16 à 30 % de la masse d'une ou de plusieurs matières suivantes :
jute
sisal
fibres de lin
chanvre
paille
jonc
lin
coton brut
fibres de coco
foin
défibrées en fibres d'une longueur de 5 à 30 mm essentiellement
Partie C :
18 à 47 % de la masse d'une ou de plusieurs substances suivantes :
pentahydrate de borax
décahydrate de borax
Borax-Polybor
acide borique
sulfate d'aluminium
résine d'huile de pin
sulfonate de lignine
**caractérisé en ce que** la partie C contient également du chlorure de magnésium et/ou du chlorure de calcium.

2. Matériau isolant selon la revendication 1, **caractérisé en ce que** la partie C contient de 5 à 5,5 % de la masse de chlorure de calcium et/ou de chlorure de magnésium.

3. Matériau isolant selon l'une quelconque des revendications 1 ou 2, **caractérisé en ce que** ce matériau isolant est comprimé en panneaux isolants d'une densité de 40 à 110 kilogrammes par mètre cube.

4. Matériau isolant selon l'une quelconque des revendications 1 à 3, **caractérisé en ce qu'**il est utilisé sous forme de matériau isoiant en vrac, d'une densité de 25 à 60 kilogrammes par mètre cube.

5. Procédé de fabrication d'un matériau isolant de la composition selon la revendication 1 ou 2, **caractérisé par** les étapes suivantes :
a. désagrégation des matières naturelles fibreuses en fibres finies, séparées par type de matières, en une ou en plusieurs étapes de trituration ou de broyage
b. dépoussiérage du matériau après chaque étape de trituration ou de broyage
c. dosage des fractions individuelles de fibres dans le malaxeur
d. réalisation d'un mélange homogène des composantes fibreuses individuelles dans un malaxeur
e. imprégnation du mélange homogène, issu du premier malaxeur, lors de son transport vers le second malaxeur, par pulvérisation de borax sous forme de solution aqueuse de 40 à 60 %
f. adjonction de chlorure de magnésium ou de chlorure de calcium, sous forme de solution aqueuse de 20 à 50 %, directement avant le second malaxeur
g. réalisation d'un mélange homogène de toutes les composantes dans un second malaxeur
h. transport du matériau dans un tunnel à vapeur, dans lequel de la vapeur à une température de 110° C environ lui est rajoutée
i. séchage du matériau dans un tunnel de séchage, à une température de 40° C environ.

6. Procédé selon la revendication 5, **caractérisé en ce que**, pour la fabrication de panneaux isolants, le mélange issu de l'étape de procédé g) est étalé en une couche régulière, qui est soumise à l'étape de procédé h), dont le produit est comprimé à l'épaisseur souhaitée à l'aide d'une presse, avant d'être soumis à l'étape de procédé i).
